(19) Europäisches Patentamt

European Patent Office

Office européen des brevets

(11) **EP 0 745 572 A1**

## (12) DEMANDE DE BREVET EUROPEEN

(43) Date de publication:
**04.12.1996 Bulletin 1996/49**

(51) Int Cl.6: **C04B 38/00**, C04B 35/10

(21) Numéro de dépôt: **96401060.7**

(22) Date de dépôt: **14.05.1996**

(84) Etats contractants désignés:
**DE FR GB IT**

(30) Priorité: **31.05.1995 FR 9506451**

(71) Demandeur: **ELF ATOCHEM S.A.**
**92800 Puteaux (FR)**

(72) Inventeurs:
- **Bachelard, Roland**
  **69007 Lyon (FR)**

- **Faure, Annick**
  **42170 Saint-Just-Saint Rambert (FR)**
- **Tretjak, Serge**
  **69390 Vourles (FR)**
- **Disson, Jean-Pierre**
  **69008 Lyon (FR)**
- **Larbot, André**
  **34980 Saint Clement de Riviere (FR)**
- **Baumard, Jean-François**
  **87000 Limoges (FR)**

(54) **Procédé de préparation de pièces poreuses en céramique comprenant des plaquettes monocristallines d'alumine alpha**

(57)   L'invention a pour objet un procédé de préparation de pièces poreuses en céramique comprenant des plaquettes monocristallines d'alumine $\alpha$ caractérisé en ce qu'il consiste à

a) mettre en forme une composition comprenant des plaquettes monocristallines d'alumine $\alpha$ et au moins un additif organique, le cas échéant au moins un additif minéral

b) éventuellement porter l'article obtenu en a) à une température suffisante pour éliminer les additifs organiques

c) calciner ledit article pour obtenir une pièce poreuse,

d) éventuellement traiter ladite pièce par un agent de consolidation et chauffer.

**Description**

La présente invention a pour objet un procédé de préparation de pièces poreuses en céramique.

Dans EP 0 460 987, on a déjà décrit un procédé de préparation de préformes consistant à cristalliser en un amas cohérent de plaquettes hexagonales monocristallines d'alumine $\alpha$, le cas échéant en présence d'un matériau de renforcement, une fine poudre tassée d'alumine amorphe, de transition ou hydratée en présence d'un fondant contenant du fluor lié chimiquement.

Il a été observé que les préformes obtenues selon ce procédé présentent parfois des défectuosités pouvant nuire à leur utilisation ultérieure notamment pour la préparation de composites à matrice métallique. Par exemple, on peut observer la présence soit de cavités soit d'amas de poudre non transformée au sein de la préforme. En outre, du fait du changement de la nature de l'alumine durant la calcination, on peut difficilement maîtriser les dimensions des pièces.

Il a maintenant été trouvé un nouveau procédé de préparation de pièces poreuses comprenant des plaquettes monocristallines d'alumine $\alpha$ qui permet d'obtenir des pièces plus homogènes du point de vue de leur structure, ce procédé étant caractérisé en ce qu'il consiste à

a) mettre en forme une composition comprenant des plaquettes monocristallines d'alumine $\alpha$ et au moins un additif organique, le cas échéant au moins un additif minéral
b) éventuellement porter l'article obtenu en a) à une température suffisante pour éliminer les additifs organiques
c) calciner ledit article pour obtenir une pièce poreuse,
d) éventuellement traiter ladite pièce par un agent de consolidation et chauffer.

Le terme "pièce poreuse" signifie ici un corps poreux essentiellement à base de plaquettes monocristallines d'alumine $\alpha$ (teneur supérieure à 90 %) présentant une porosité au moins égale à 50 %.

Les plaquettes selon le procédé de l'invention sont généralement choisies parmi les plaquettes monocristallines d'alumine $\alpha$ présentant un diamètre compris entre 2 et 50 µm, de préférence 2 et 25 µm et une épaisseur comprise entre 0,1 et 2 µm, de préférence 0,1 et 1 µm. On utilise avantageusement les plaquettes précitées présentant une pureté supérieure à 90 % et de préférence 94 %.

Parmi ces plaquettes, on donne la préférence à celles qui se présentent sous une forme hexagonale.

De telles plaquettes peuvent être préparées notamment selon le procédé décrit dans EP-A-425325 au nom de la Demanderesse, à partir d'alumine amorphe, de transition ou hydratée et d'un fondant contenant du fluor lié chimiquement.

Dans la présente demande les termes "additif organique", "additif minéral" et "agent de consolidation" ont la signification suivante :

L'expression "additif organique" désigne :

- les dispersants destinés à améliorer la dispersion des plaquettes d'alumine $\alpha$ lorsque ces dernières sont utilisées en milieu aqueux ou solvanté. A titre d'exemples, on peut citer les polyacrylates ou polyméthacrylates d'ammonium ou de sodium, les oléates de glycérol, les polyéthylèneimines, les esters phosphoriques et les huiles de poisson. De préférence, on utilise les polyacrylates d'ammonium.
- les liants destinés à assurer la tenue mécanique des pièces mises en forme. De tels liants sont généralement choisis parmi les alcools polyvinyliques, l'amidon, la méthylcellulose, la carboxyméthylcellulose, l'éthylcellulose, l'hydroxyéthylcellulose, l'hydroxypropylcellulose, la méthyl-hydroxyéthylcellulose, la méthylhydroxy-propylcellulose, les alginates, le polyvinylbutyral, le polyéthylène, le polyéthylèneglycol, le polypropylèneglycol, le polyvinylacétate, les polyacrylates, le polyméthylméthacrylate, les polyalkylacrylates, la polyvinylpyrrolidone, le polypropylène, le polystyrène, la poly-2éthyl-2oxazoline. De préférence, on utilise les alcools polyvinyliques, l'amidon, les dérivés de la cellulose et la polyvinylpyrrolidone.
- les plastifiants destinés à conférer de la souplesse aux liants. A titre d'exemples, on peut citer le polyéthylèneglycol, le polypropylèneglycol, l'eau, le glycol, l'acide stéarique, les stéarates et les phtalates. De préférence, on utilise le polyéthylèneglycol.

L'expression "additif minéral" désigne les composés permettant d'abaisser la température de cuisson ou de consolider la pièce poreuse. A titre d'illustration de ces composés, on peut citer notamment les poudres de verre présentant, en particulier, un coefficient de dilatation proche de l'alumine $\alpha$, de mono- ou tri-phosphate d'aluminium, de spinelle $MgAl_2O_4$ ou de mullite et les gels d'alumine, de silice ou de zircone.

L'expression "agent de consolidation" désigne les composés susceptibles d'améliorer la résistance mécanique par réaction avec l'alumine $\alpha$ engagée. A titre d'exemples, on peut citer l'acide phosphorique, les sels minéraux de magnésium, de calcium ou de sodium.

Dans la mise en oeuvre du procédé selon l'invention, on utilise au moins 0,1 % et de préférence de 0,5 à 22 % en poids d'additif organique et au plus 10 % et de préférence de 0,5 à 7 % en poids d'additif minéral par rapport au poids des plaquettes engagées.

L'étape a) du procédé conforme à l'invention consiste à préparer une composition comprenant des plaquettes d'alumine $\alpha$, au moins un additif organique et éventuellement au moins un additif minéral et à mettre en forme ladite composition.

Selon un premier mode de réalisation du procédé de l'invention, la composition est obtenue par mélange des plaquettes et des additifs en présence d'eau ou un solvant organique par exemple un alcool, un acétate, une cétone ou un solvant chloré.

Selon une première variante, la composition se présente sous l'aspect d'une pâte dont la mise en forme est réalisée notamment par les méthodes d'extrusion ou de moulage-injection.

Selon une deuxième variante, on utilise une composition sous forme d'une suspension qui s'avère particulièrement adaptée à une mise en forme par filtration, coulage en bande ou dans un moule.

Selon un deuxième mode de réalisation du procédé selon l'invention, on utilise une composition sèche c'est-à-dire ne contenant pas ou très peu d'eau ou de solvant. Une telle composition est avantageusement utilisée lorsque la mise en forme est réalisée par pressage isostatique ou uniaxial. La composition peut être obtenue par simple mélange à sec de poudres de plaquettes et d'additifs. Toutefois, du fait de leur meilleure coulabilité, on utilise préférentiellement les compositions se présentant sous l'aspect de granulés. De tels granulés peuvent être obtenus par exemple par atomisation-séchage à partir d'une suspension ou par précompaction-broyage à sec.

Dans l'étape b) du procédé selon l'invention, l'élimination totale ou partielle du ou des additifs organiques est généralement réalisée à une température supérieure à 200°C et de préférence comprise entre 250 et 700°C par combustion sous air, pyrolyse sous atmosphère neutre ou réductrice ou sous vide ou encore par dissolution dans un fluide supercritique.

Dans l'étape c) du procédé selon l'invention, la cuisson est généralement réalisée à une température comprise entre 900 et 1700°C et de préférence entre 1000 et 1400°C, sous air, atmosphère neutre ou réductrice ou sous vide.

Après refroidissement et démoulage, la pièce poreuse obtenue peut être façonnée par exemple par découpe au laser ou au jet d'eau ou tout autre moyen permettant de lui conférer les dimensions et la forme désirées.

L'étape d) du procédé selon l'invention permet d'améliorer la résistance mécanique de la pièce obtenue en c). Cette étape est mise en oeuvre par immersion de la pièce dans une solution aqueuse contenant au moins un des agents de consolidation précités et chauffage de la pièce à une température comprise entre 150 et 1600°C.

Le procédé conforme à l'invention permet de préparer des corps poreux en céramiques destinés à la fabrication de composites en particulier à matrice métallique ou être utilisés en tant que support de catalyseur ou de filtrationdes gaz ou des liquides.

Les exemples qui suivent permettent d'illustrer l'invention.

La porosité des pièces obtenues dans les exemples est calculée selon la formule

$$\text{porosité (\%)} = (1 - \frac{\text{densité}}{\text{densité théorique } Al_2O_3}) \times 100$$

dans laquelle la densité de la pièce est déterminée par pesée et mesure de ses dimensions à l'aide d'un pied à coulisse.

La résistance à l'écrasement des pièces est mesurée selon le "test brésilien" consistant à appliquer une force de compression sur une pastille de 30 mm de diamètre et 10 mm d'épaisseur reposant sur la tranche jusqu'à ce que l'on observe une fissuration qui se manifeste par une chute brutale de la force exercée par la machine d'essais.

## <u>EXEMPLE 1</u>

On malaxe des plaquettes d'alumine $\alpha$ (diamètre : 10-15 $\mu$m; épaisseur: 0,3-0,5 $\mu$m; 95 % d'alumine $\alpha$; commercialisées par ELF ATOCHEM S.A., grade T2) et les divers additifs du tableau 1 dans un mélangeur à soc de charrue puis dans un batteur-mélangeur planétaire.

La pâte ainsi obtenue est laissée au repos quelques heures, désaérée et extrudée dans une extrudeuse dont la filière présente l'aspect d'un anneau permettant l'obtention d'un tube de 20 mm de diamètre.

Après extrusion, les tubes obtenus sont séchés sur des rouleaux évitant la cambrure. Les tubes sont ensuite introduits horizontalement dans un four et calcinés sous air selon le profil thermique suivant :

-    montée en température rapide de 20°C à 365°C,
-    palier à 365°C pendant 30 minutes pour éliminer l'essentiel des additifs organiques,
-    chauffage à 120°C/h jusqu'à la température de 1500 ou 1600°C qui est maintenue pendant 3 h.

EP 0 745 572 A1

On obtient des pièces dont la porosité varie de 56 à 67 % (tableau 1).

TABLEAU 1

| EXEMPLES N° | 1a | 1b | 1c | 1d |
|---|---|---|---|---|
| Plaquette $Al_2O_3\alpha$ (g) | 82 | 87 | 82 | 83 |
| Amidon (g) | 10 | 5 | 10 | 5 |
| Méthylcellulose (g) | 4 | 4 | 4 | 6 |
| Amijel (g) | 4 | 4 | 4 | 6 |
| Eau (g) | 55 | 55 | 55* | 52 |
| Pression d'extrusion, (MPa) | 3,3 | 3,0-3,5 | 3,1 | 3,3 |
| Porosité après cuisson (%) - à 1500°C - 3 h | 56 | 67 | 59 | 65 |
| - à 1600°C - 3 h | | 65 | | 66 |

\* eau/glycerol 98/2
Amidon : Cerestar : RG 03408
Méthylcellulose : Méthocel A15LV
Amijel : Cerestar ML 12072

## EXEMPLE 2

On prépare une solution contenant 6 % d'alcool polyvinylique (Mowiol 4-88 commercialisé par Hoechst) dans de l'eau à 30°C. A 245 parties en poids de cette solution sont ajoutées 100 parties en poids de plaquettes d'alumine $\alpha$ (grade T2; ELF ATOCHEM S.A.). La suspension est agitée pendant 30 min. dans une turbine d'agitation en présence de 0,024 % en poids par rapport à la composition d'agent anti-moussant (Contraspun-Zimmer et Schwartz).

La suspension ainsi obtenue est tamisée en dessous de 210 µm pour retenir l'alcool polyvinylique non dissous et atomisée dans un atomiseur muni d'une buse monofluide sous une pression de 2,2 MPa. Le séchage est effectué à contre-courant d'air dont la température d'entrée est égale à 414°C et celle de sortie égale à 95°C. On récupère ainsi des granulés sous forme de billes de diamètre compris entre 100 et 500 µm constituées de plaquettes liées entre-elles par l'alcool polyvinylique.

1 à 2 g des granulés ainsi obtenus sont introduits dans la matrice d'une presse uniaxiale de diamètre 30 mm et pressés selon les conditions du tableau 2. Les pastilles obtenues sont déliantées par chauffage à 500°C à l'air pendant 1 h, puis consolidées par cuisson à 1300°C pendant 3 h.

Les mesures de la porosité et de la résistance à l'écrasement des céramiques poreuses ainsi obtenues sont présentées dans le tableau 2.

TABLEAU 2

| Exemple | Pression de mise en forme (MPa) | Variation d'épaisseur lors de la cuisson (%) | Résistance à l'écrasement (MPa) | Porosité (%) |
|---|---|---|---|---|
| 2a | 15 | + 32,2 | 0,07 | 83,5 |
| 2b | 20 | + 33,8 | 0,14 | 80,6 |
| 2c | 40 | + 13,4 | 0,77 | 73,1 |
| 2d | 70 | + 3,5 | 1,59 | 65,4 |
| 2e | 80 | + 3,3 | 1,90 | 64,2 |
| 2f | 160 | - 0,6 | 3,67 | 57,7 |

## EXEMPLE 3

Les granulés préparés selon l'exemple 2 sont placés dans une étuve à 50°C sous 95 % d'humidité relative pendant 8 h. La prise de poids lors de ce traitement indique une teneur finale en eau dans les granulés de 2,9 %.

Ces granulés sont pressés, déliantés et calcinés dans les mêmes conditions que l'exemple 2.

Les céramiques poreuses ainsi obtenues présentent une porosité variant de 52 à 78 % (tableau 3).

TABLEAU 3

| Exemple | Pression de mise en forme (MPa) | Variation d'épaisseur lors de la cuisson (%) | Résistance à l'écrasement (MPa) | Porosité (%) |
|---------|---------------------------------|----------------------------------------------|----------------------------------|--------------|
| 3a | 10 | - 0,2 | 0,38 | 78,2 |
| 3b | 15 | - 2,0 | 1,04 | 73,5 |
| 3c | 20 | - 3,9 | 1,29 | 71,5 |
| 3d | 40 | - 5,0 | 2,15 | 63,9 |
| 3e | 70 | - 5,2 | 2,8 | 60,6 |
| 3f | 80 | - 6,7 | 3,4 | 60,6 |
| 3g | 160 | - 8,1 | 5,1 | 54,6 |
| 3h | 320 | - 8,3 | 6,9 | 52 |

## EXEMPLE 4

175 g de granulés préparés selon l'exemple 2 sont introduits dans un moule rectangulaire en graphite (100 mm x 120 mm) et pressés dans une presse chauffante (160°C; 5 MPa).

La pièce obtenue après démoulage est déliantée à 500°C à l'air pendant 1 h et chauffée à 1300°C à raison de 120°C/h et maintenue à cette température pendant 3 heures.

Cette pièce présente une masse égale à 150 g, une porosité de 76 %, et pratiquement aucune variation d'épaisseur (dimensions 98 mm x 118 mm x 14-15 mm).

## EXEMPLE 5

On disperse 30 parties en poids de plaquettes (Grade T2; ELF ATOCHEM S.A.) dans 70 parties en poids d'eau en présence des additifs décrits dans le tableau 4. La teneur en additif est exprimée en parties en poids pour 100 parties en poids de plaquettes.

Les suspensions ainsi obtenues sont atomisées dans une atomiseur ANHYDRO® de laboratoire équipé d'une buse bifluide afin d'obtenir des granulés de diamètre 10-60 μm.

Ces granulés sont pressés à température ambiante dans les conditions du tableau 4 pour former des disques de 30 mm de diamètre et 10 mm d'épaisseur.

Les disques sont déliantés à 500°C pendant 1 h et chauffés dans les conditions du tableau 4.

Les caractéristiques des céramiques poreuses obtenues sont présentées dans le tableau 4.

## TABLEAU 4

| Exemple | Additif organique 1 | | Additif organique 2 | | Pression de pressage (MPa) | Température cuisson (°C) | Durée du palier de cuisson (heures) | Résistance à l'écrasement (MPa) | Porosité (%) |
|---|---|---|---|---|---|---|---|---|---|
| | Nature | % | Nature | % | | | | | |
| 5.1 | alcool polyvinylique | 4 | polyéthylèneimine | 1 | 10 | 1100 | 3 | 0,11 à 0,4 | 64 |
| 5.2 | alcool polyvinylique | 15,2 | | | 10 | 1100 | 3 | 0,1 | 80 |
| 5.3 | alcool polyvinylique | 15,2 | | | 15 | 1100 | 3 | 0,15 | 77,5 |
| 5.4 | alcool polyvinylique | 15,2 | | | 10 | 1200 | 3 | 0,28 | 80 |
| 5.5 | alcool polyvinylique | 15,2 | | | 15 | 1200 | 3 | 0,4 | 77 |
| 5.6 | alcool polyvinylique | 15,2 | | | 10 | 1300 | 3 | 0,73 | 79 |
| 5.7 | alcool polyvinylique | 15,2 | | | 15 | 1300 | 3 | 1,2 | 76,5 |
| 5.8 | alcool polyvinylique | 15,2 | | | 10 | 1400 | 3 | 0,8 à 1,3 | 79 |
| 5.9 | alcool polyvinylique | 15,2 | | | 15 | 1400 | 3 | 1,9 à 2,3 | 75 |
| 5.10 | alcool polyvinylique | 15,2 | | | 10 | 1500 | 3 | 2 à 2,2 | 78 |
| 5.11 | alcool polyvinylique | 15,2 | | | 15 | 1500 | 3 | 2 à 3 | 74,5 |
| 5.12 | alcool polyvinylique | 15,2 | polyéthylèneglycol | 5,8 | 5 | 1200 | 3 | 0,01 | 83 |
| 5.13 | alcool polyvinylique | 15,2 | polyéthylèneglycol | 5,8 | 10 | 1200 | 3 | 0,2 | 80 |
| 5.14 | alcool polyvinylique | 15,2 | polyéthylèneglycol | 5,8 | 15 | 1200 | 3 | 0,3 | 78 |
| 5.15 | alcool polyvinylique | 15,2 | polyéthylèneglycol | 5,8 | 20 | 1200 | 3 | 0,4 | 76 |
| 5.16 | alcool polyvinylique | 15,2 | polyéthylèneglycol | 5,8 | 5 | 1300 | 3 | 0,4 | 82 |
| 5.17 | alcool polyvinylique | 15,2 | polyéthylèneglycol | 5,8 | 10 | 1300 | 3 | 0,8 | 79 |
| 5.18 | alcool polyvinylique | 15,2 | polyéthylèneglycol | 5,8 | 15 | 1300 | 3 | 1 | 76,5 |
| 5.19 | alcool polyvinylique | 15,2 | polyéthylèneglycol | 5,8 | 20 | 1300 | 3 | 1,3 | 74 |
| 5.20 | alcool polyvinylique | 15,2 | polyéthylèneglycol | 5,8 | 5 | 1400 | 3 | 0,7 | 81 |
| 5.21 | alcool polyvinylique | 15,2 | polyéthylèneglycol | 5,8 | 10 | 1400 | 3 | 1,2 | 78,5 |
| 5.22 | alcool polyvinylique | 15,2 | polyéthylèneglycol | 5,8 | 15 | 1400 | 3 | 1,5 | 76 |
| 5.23 | alcool polyvinylique | 15,2 | polyéthylèneglycol | 5,8 | 20 | 1400 | 3 | 2 | 73,5 |

EP 0 745 572 A1

## TABLEAU 4 (Suite)

| Exemple | Additif organique 1 | | Additif organique 2 | | Pression de pressage (MPa) | Température cuisson (°C) | Durée du palier de cuisson (heures) | Résistance à l'écrasement (MPa) | Porosité (%) |
|---|---|---|---|---|---|---|---|---|---|
| | Nature | % | Nature | % | | | | | |
| 5.24 | alcool polyvinylique | 15,2 | | | 10 | 1300 | 4 | 0,9 | 78,5 |
| 5.25 | alcool polyvinylique | 15,2 | | | 15 | 1300 | 4 | 1,4 | 76 |
| 5.26 | alcool polyvinylique | 15,2 | | | 10 | 1300 | 5 | 0,1 | 79 |
| 5.27 | alcool polyvinylique | 15,2 | | | 15 | 1300 | 5 | 1,5 | 76 |
| 5.28 | alcool polyvinylique | 15,2 | | | 10 | 1300 | 6 | 1 | 79 |
| 5.29 | alcool polyvinylique | 15,2 | | | 15 | 1300 | 6 | 1,4 | 75,5 |
| 5.30 | alcool polyvinylique | 15,2 | | | 10 | 1400 | 4 | 1,5 | 78 |
| 5.31 | alcool polyvinylique | 15,2 | | | 15 | 1400 | 4 | 2,1 | 75 |
| 5.32 | alcool polyvinylique | 20 | | | 15 | 1300 | 3 | 0,7 | 75,3 |
| 5.33 | alcool polyvinylique | 20 | | | 20 | 1300 | 3 | 1 | 73 |
| 5.34 | alcool polyvinylique | 20 | | | 15 | 1400 | 3 | 1,7 | 74,2 |
| 5.35 | alcool polyvinylique | 20 | | | 20 | 1400 | 3 | 2,3 | 71,8 |
| 5.36 | alcool polyvinylique | 20 | | | 15 | 1300 | 3 | | 78 |
| 5.37 | poly 2-éthyl 2-oxazoline | 15,2 | | | 10 | 1300 | 3 | | 78 |
| 5.38 | polyvinylpyrrolidone | 15,2 | | | 15 | 1300 | 3 | | 76 |
| 5.39 | polyvinylpyrrolidone | 15,2 | | | 20 | 1300 | 3 | | 75 |
| 5.40 | alcool polyvinylique | 3 | méthylcellulose | 3 | 5 | 1300 | 3 | 0,7 | 79 |
| 5.41 | alcool polyvinylique | 3 | méthylcellulose | 3 | 10 | 1300 | 3 | 1,7 | 73,6 |
| 5.42 | alcool polyvinylique | 3 | méthylcellulose | 3 | 15 | 1300 | 3 | 2,4 | 70,5 |
| 5.43 | alcool polyvinylique | 3 | méthylcellulose | 3 | 20 | 1300 | 3 | 3,5 | 68,5 |
| 5.44 | alcool polyvinylique | 3 | méthylcellulose | 3 | 40 | 1300 | 3 | 3,5 | 63,5 |

Alcool polyvinylique : Mowiol 4-88 ; HOECHST
Poly-2-éthyl 2-oxazoline : MW 50000 ; ALDRICH
Polyvinylpyrrolidone : K15 ; ALDRICH
Méthylcellulose : Methocel ; DOW CHEMICAL
Polyéthylèneglycol : PEG 20M; UNION CARBIDE
Polyéthylèneimine : Polymin ; BAYER

EP 0 745 572 A1

## EXEMPLE 6

On procède dans les conditions de l'exemple 5 en présence d'alcool polyvinylique (Mowiol 4-88 ; HOECHST) et de plaquettes monocristallines d'alumine α de grade T'0 (ELF ATOCHEM S.A.) présentant un diamètre compris entre 5 et 8 μm, une épaisseur comprise entre 0,2 et 0,5 μm et une pureté supérieure à 95 %.

Les conditions mises en oeuvre et les résultats sont présentés dans le tableau 5.

TABLEAU 5

| Exemple | Additif organique | | Pression de pressage (MPa) | Température cuisson (°C) | Durée du palier de cuisson (heures) | Résistance à l'écrasement (MPa) | Porosité (%) |
|---------|-------------------|------|-----------|-----------|-----------|-----------|-----------|
|  | Nature | % |  |  |  |  |  |
| 6a | Alcool polyvinylique | 20 | 10 | 1400 | 3 | 1,8 | 78 |
| 6b | Alcool polyvinylique | 20 | 15 | 1400 | 3 | 2,4 | 75,6 |

## EXEMPLE 7

On prépare une suspension par mélange sous agitation de 330 g de plaquettes d'alumine α (grade T2; ELF ATOCHEM S.A.) et 49,5g d'alcool polyvinylique (Mowiol 4-88 ; HOECHST) dans 1 litre d'eau.

La suspension ainsi obtenue est versée dans un filtre constitué par une paroi cylindrique en acier et un support de filtration métallique sur lequel est placé un papier filtre. La partie inférieure du filtre est reliée à un récipient pouvant être mis sous vide. Après mise sous vide du dispositif, on récupère sur le filtre un gâteau poreux et dans le récipient l'eau et l'alcool polyvinylique en excès.

Après démoulage, le gâteau est séché dans une étuve à 50°C pendant 16 h, chauffé à 500°C à l'air pendant 1 h pour éliminer l'alcool polyvinylique, puis chauffée à 1300°C pendant 3 h.

La céramique poreuse ainsi obtenue présente une porosité égale à 84 % et la résistance à l'écrasement mesurée sur une série de céramiques est comprise entre 0,15 et 0,19 MPa.

## EXEMPLE 8

On prépare dans les conditions de l'exemple 5 des suspensions aqueuses par mélange de plaquettes d'alumine α (grade T2 ou T'0; ELF ATOCHEM S.A.), d'alcool polyvinylique (Mowiol 4-88; HOECHST) et d'un additif minéral du type LiF, $Al(PO_3)_3$ (PROLABO) ou d'un verre d'oxyde de composition : CaO = 32,8 %; MgO = 0,7 %; $Al_2O_3$ = 6,4 %; $SiO_2$ = 42,9 %; $B_2O_3$ = 17,2 % (PROLABO) (Tableau 6).

Les granulés obtenus après atomisation sont pressés, déliantés et calcinés dans les conditions décrites à l'exemple 5.

Les caractéristiques des céramiques poreuses ainsi obtenues sont présentées dans le tableau 6.

TABLEAU 6

| Plaquettes | Additif minéral | Additif organique 1 | | Pression de pressage (MPa) | Température cuisson (°C) | Résistance à l'écrasement (MPa) | Porosité (%) |
|---------|-------------------|------|------|-----------|-----------|-----------|-----------|
|  |  | Nature | % |  |  |  |  |
| T2 | LiF | alcool polyvinylique | 20 | 10 | 1300 | 0,6 | 78,9 |
| T2 | LiF | alcool polyvinylique | 20 | 15 | 1300 | 0,9 | 75,7 |
| T2 | LiF | alcool polyvinylique | 20 | 10 | 1350 | 0,7 | 78,4 |

TABLEAU 6   (suite)

| Plaquettes | Additif minéral | Additif organique 1 | | Pression de pressage (MPa) | Température cuisson (°C) | Résistance à l'écrasement (MPa) | Porosité (%) |
|---|---|---|---|---|---|---|---|
| | | Nature | % | | | | |
| T2 | LiF | alcool polyvinylique | 20 | 15 | 1350 | 0,9 | 75,5 |
| T2 | LiF | alcool polyvinylique | 20 | 10 | 1400 | 1,2 | 77,6 |
| T2 | LiF | alcool polyvinylique | 20 | 15 | 1400 | 1,7 | 75,1 |
| T2 | Verre | alcool polyvinylique | 20 | 10 | 1400 | 2,7 | 74,4 |
| T'0 | $Al(PO_3)_3$ | alcool polyvinylique | 20 | 10 | 1400 | 4 | 70,6 |
| T'0 | $Al(PO_3)_3$ | alcool polyvinylique | 20 | 15 | 1400 | 6,8 | 67 |

## EXEMPLE 9

On opère dans les conditions de l'exemple 7 modifié en ce que la suspension contient, en outre, 3 % en poids par rapport aux plaquettes d'alumine $\alpha$ d'un verre d'oxyde finement broyé de composition : $SiO_2$ = 47 %, $B_2O_3$ = 19,5 %, CaO = 33,5 %.

Les caractéristiques des céramiques poreuses obtenues après cuisson à une température variant de 1250 à 1600°C sont présentées dans le tableau 7 (pour chaque exemple, on a utilisé 3 céramiques sauf pour l'exemple 9b qui en compte 8).

TABLEAU 7

| Exemple | Température de cuisson (°C) | Porosité (%) | | Résistance à l'écrasement (MPa) | |
|---|---|---|---|---|---|
| | | Moyenne | Ecart-type | Moyenne | Ecart-type |
| 9a | 1250 | 84,9 | 0,1 | 0,5 | 0,05 |
| 9b | 1300 | 83,5 | 0,5 | 1,18 | 0,2 |
| 9c | 1400 | 81,6 | 0,6 | 1,37 | 0,02 |
| 9d | 1500 | 76,8 | 0,1 | 5,34 | 0,4 |
| 9e | 1600 | 68,1 | 0,5 | 14,8 | 2,6 |

## EXEMPLE 10

Trois céramiques poreuses obtenues selon l'exemple 5.27 (Tableau 4) de porosité égale à 77 % sont immergées pendant une h dans une solution aqueuse d'acide phosphorique de concentration variant entre 5 et 50 % en poids (tableau 8).

Les céramiques poreuses ainsi obtenues sont séchées à 100°C à l'air, puis calcinées à 500 °C pendant 3 h.

Les caractéristiques des céramiques avant et après traitement par les solutions d'acide phosphorique sont présentées dans le tableau 8.

## TABLEAU 8

| | H$_3$PO$_4$ (% en poids) | Porosité (%) | Résistance à l'écrasement (MPa) |
|---|---|---|---|
| Avant traitement | - | 77 | 3,00 |
| Après traitement | 5 | 76,3 | 3,15 |
| | 10 | 72,5 | 4,40 |
| | 50 | 72 | 15,3 |

**Revendications**

1. Procédé de préparation de pièces poreuses en céramique comprenant des plaquettes monocristallines d'alumine α caractérisé en ce qu'il consiste à

    a) mettre en forme une composition comprenant des plaquettes monocristallines d'alumine α et au moins un additif organique, le cas échéant au moins un additif minéral
    b) éventuellement porter l'article obtenu en a) à une température suffisante pour éliminer les additifs organiques
    c) calciner ledit article pour obtenir une pièce poreuse,
    d) éventuellement traiter ladite pièce par un agent de consolidation et chauffer.

2. Procédé selon la revendication 1 caractérisé en ce que la mise en forme est réalisée par pressage uniaxial ou isostatique.

3. Procédé selon la revendication 2 caractérisé en ce que la composition se présente sous forme d'une poudre.

4. Procédé selon la revendication 2 caractérisé en ce que la composition se présente sous forme de granulés.

5. Procédé selon la revendication 1 caractérisé en ce que la mise en forme est réalisée par moulage, extrusion, filtration, coulage en bande ou dans un moule.

6. Procédé selon la revendication 5 caractérisé en ce que la composition est une pâte ou une suspension.

7. Procédé selon l'une des revendications 1 à 6 caractérisé en ce que la température de l'étape b) est supérieure à 250°C.

8. Procédé selon l'une des revendication 1 à 7 caractérisé en ce que la température de calcination est comprise entre 900 et 1700°C.

9. Procédé selon l'une des revendications 1 à 8 caractérisé en ce que les plaquettes présentent un diamètre compris entre 2 et 50 µm et une épaisseur comprise entre 0,1 et 2 µm.

10. Procédé selon l'une des revendications 1 à 9 caractérisé en ce que l'additif minéral est choisi parmi les poudres de verre, de mono- ou tri-phosphate d'aluminium, de spinelle MgAl$_2$O$_4$ ou de mullite et les gels d'alumine, de silice ou de zircone.

11. Procédé selon l'une des revendications 1 à 10 caractérisé en ce que la composition comprend au moins 0,1 % en poids d'additif organique et au plus 10 % en poids d'additif minéral par rapport au poids de plaquettes.

12. Procédé selon l'une des revendications 1 à 11 caractérisé en ce que l'agent de consolidation est choisi parmi l'acide phosphorique et les sels minéraux de magnésium, de calcium ou de sodium.

Office européen
des brevets

# RAPPORT DE RECHERCHE EUROPEENNE

Numero de la demande

EP 96 40 1060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 460 987 (ATOCHEM)<br>* abrégé * | 1 | C04B38/00<br>C04B35/10 |
| D,A | FR-A-2 652 075 (ATOCHEM)<br>* revendications 1,12 * | 1 | |
| A | DE-A-41 07 869 (NKG INSULATORS)<br>* abrégé * | 1 | |
| A | EP-A-0 564 982 (HOECHST CERAM TEC)<br>* abrégé * | 1 | |
| A | EP-A-0 327 687 (NORTON COMP.)<br>* abrégé * | | |
| A | DATABASE WPI<br>Week 9436<br>Derwent Publications Ltd., London, GB;<br>AN 94-290777<br>XP002012170<br>& JP-A-06 219 864 (HARIMA CERAMIC KK)<br>* abrégé * | | |

**DOMAINES TECHNIQUES RECHERCHES (Int.Cl.6)**

C04B

Le présent rapport a été établi pour toutes les revendications

| Lieu de la recherche | Date d'achèvement de la recherche | Examinateur |
|---|---|---|
| LA HAYE | 30 Août 1996 | Daeleman, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)